# EUROPEAN PATENT SPECIFICATION

(11) **EP 2 558 534 B1**
(45) Date of publication and mention of the grant of the patent: **02.11.2016**
(21) Application number: 10849661.3
(22) Date of filing: 14.04.2010
(51) Int. Cl.: C08L 53/02, C08L 25/08, C08L 25/10, C08K 5/521, C08K 5/49, C08K 5/16

(54) **STYRENIC BLOCK COPOLYMER-BASED COMPOSITION WITH ENHANCED FLAME-RETARDANT PROPERTIES**
ZUSAMMENSETZUNG AUF STYROLBLOCKCOPOLYMERBASIS MIT VERBESSERTEN FLAMMHEMMENDEN EIGENSCHAFTEN
COMPOSITION À BASE DE COPOLYMÈRE STYRÉNIQUE SÉQUENCÉ PRÉSENTANT DES PROPRIÉTÉS IGNIFUGES ACCRUES

(43) Date of publication of application: 20.02.2013
(73) Proprietor: Dow Global Technologies LLC, Midland, MI 48674 (US)
(72) Inventor: CHEN, Jing Given, Shanghai 200231 (CN); LI, Bin, Shanghai 200231 (CN); BROWN, Geoffrey D., Bridgewater, New Jersey 08807 (US); TAI, Xiangyang, Shanghai 201100 (CN); WU, Tong, Shanghai 201100 (CN); PANG, Kawai Peter, Belle Mead, New Jersey 08502 (US); YANG, Yongyong, Shanghai 201613 (CN); EATON, Robert F., Belle Mead, New Jersey 08502 (US); MUNDRA, Manish, Somerset, New Jersey 08873 (US)
(74) Representative: Beck Greener
(86) International application number: PCT/CN2010/071752
(87) International publication number: WO 2011/127651

(56) References cited:
- WO-A1-2005/097900
- WO-A1-2005/097900
- WO-A1-2006/104811
- WO-A1-2009/047353
- CN-A- 101 440 190
- CN-A- 101 684 192
- KR-A- 20090 066 379
- US-A1- 2008 206 468
- US-B2- 7 582 692

## Description

### BACKGROUND

Flexible flame retardant elastomer compositions are desirable for a number of applications, including for wire and cable insulation and jacketing. Common applications include flexible wiring for consumer electronics such as cell phone charger wire and computer data, power and accessory cords. Unfortunately, the available technology does not provide the desired balance of high flame retardant performance, good heat stability, high flexibility, and mechanical properties.

### SUMMARY

One aspect of the invention provides halogen-free, flame-retardant compositions. These compositions comprise a styrenic block copolymer, a low-melting, phosphorus-based flame retardant having a melting temperature no higher than 170 °C, and a blend of solid intumescent flame retardants comprising at least two phosphorous and nitrogen-containing phosphoric acid salts, namely a melamine derivative and piperazine pyrophosphate. In these compositions the styrenic block copolymer can comprise at least 40 percent by weight of the total polymer content of the composition. The compositions are characterized in that they pass the UL-62 VW-1 flame test.

In some embodiments of the compositions, the styrenic block copolymer comprises at least 50 percent by weight of the total polymer content.

In the compositions of the invention, the at least two phosphorous and nitrogen-containing phosphoric acid salts comprise a melamine derivative and piperazine pyrophosphate. In some embodiments, the styrenic block copolymer is SEBS and the melamine derivative is melamine pyrophosphate.

In some embodiments of the compositions, the low-melting, phosphorus-based flame retardant is an organic phosphate ester, such as bisphenol A diphosphate.

In some embodiments, the compositions further comprise a polar olefin polymer and/or a polycarbonate.

In some embodiments of the compositions, the low-melting, phosphorus-based flame retardant and the blend of solid intumescent phosphorus and nitrogen-containing flame retardants account for at least 25 percent by weight of the composition and the blend of solid intumescent phosphorus and nitrogen-containing flame retardants account for at least 20 percent by weight of the total weight of the phosphorus-based flame retardant and the blend of solid intumescent phosphorus and nitrogen-containing flame retardants.

Another aspect of the invention provides a wire or cable comprising a jacketing layer or an insulating layer comprising a halogen-free, flame-retardant composition in accordance with this invention.

### DETAILED DESCRIPTION OF THE PREFERRED EMBODIMENT

One aspect of the invention provides halogen-free, flame-retardant thermoplastic compositions that include a styrenic block copolymer, a low-melting, phosphorus-based flame retardant having a melting temperature no higher than 170 °C, and a blend of solid intumescent flame retardants. The blend of solid intumescent flame retardants include at least two phosphorous and nitrogen-containing phosphoric acid salts, namely a melamine derivative and piperazine pyrophosphate, that synergistically enhance the flame-retardant properties of the compositions relative to compositions that include other flame-retardant packages. Thus, the compositions pass the UL-62 VW-1 flame test. The compositions are further characterized by good mechanical properties, which render them suitable for use in a wide variety of articles, including jacketing and insulation for cables and/or wires.

"Halogen-free" and like terms mean that the compositions are without or substantially without halogen content, i.e., contain less than 2000 mg/kg of halogen as measured by ion chromatography (IC) or a similar analytical method. Halogen content of less than this amount is considered inconsequential to the efficacy of the blend as, for example, a wire or cable covering.

### Styrenic Block Copolymers:

The styrenic block copolymer(s) form a continuous polymer phase in the present compositions. In some embodiments, additional polymers may be present in the compositions. These additional polymers can be dispersed in, or co-continuous with, the styrenic block copolymer(s). If additional polymers are present, the styrenic block copolymer typically accounts for at least 25 wt.% of the polymer phase. This includes embodiments in which the styrenic block copolymer accounts for at least 30 wt.% of the polymer phase, at least 40 wt.% of the polymer phase, and at least 50 wt% of the polymer phase.

Generally speaking, styrenic block copolymers include at least two monoalkenyl arene blocks, preferably two polystyrene blocks, separated by a block of a saturated conjugated diene, such as a saturated polybutadiene block. Suitable unsaturated block copolymers include, but are not limited to, those represented by the following formulas: A-B-R(-B-A)ₙ or Aₓ-(BA-)_{y}-BA wherein each A is a polymer block comprising a vinyl aromatic monomer, such as styrene, and each B is a polymer block comprising a conjugated diene, such as isoprene or butadiene, and optionally a vinyl aromatic monomer, such as styrene; R is the remnant of a multifunctional coupling agent (if R is present, the block copolymer can be a star or branched block copolymer); n is an integer from 1 to 5; x is zero or 1; and y is a real number from zero to 4.

Methods for the preparation of such block copolymers are known in the art. See, e.g., U.S. Pat. No. 5,418,290. Suitable catalysts for the preparation of useful block copolymers with unsaturated rubber monomer units include lithium based catalysts and especially lithium-alkyls. U.S. Pat. No. 3,595,942 describes suitable methods for hydrogenation of block copolymers with unsaturated rubber monomer units to from block copolymers with saturated rubber monomer units.

Suitable block copolymers having unsaturated rubber monomer units include, but are not limited to, styrene-butadiene (SB), styrene-ethylene/butadiene (SEB), styrene-isoprene(SI), styrene-butadiene-styrene (SBS), styrene-isoprene-styrene (SIS), α-methylstyrene-butadiene-α-methylstyrene and α-methylstyrene-isoprene-α-methylstyrene.

Block copolymers with unsaturated rubber monomer units can comprise homopolymers of butadiene or isoprene or they can comprise copolymers of one or both of these two dienes with a minor amount of styrenic monomer. In some embodiments, the block copolymers are derived from (i) a C₃₋₂₀ olefin substituted with an alkyl or aryl group (e.g., 4-methyl-1-pentene and styrene) and (ii) a diene (e.g. butadiene, 1,5-hexadiene, 1,7-octadiene and 1,9-decadiene). A non-limiting example of such olefin copolymer includes styrene-butadiene-styrene (SBS) block copolymer.

Preferred block copolymers with saturated rubber monomer units comprise at least one segment of a styrenic unit and at least one segment of an ethylene-butene or ethylene-propylene copolymer. Preferred examples of such block copolymers with saturated rubber monomer units include styrene/ethylene-butene copolymers, styrene/ethylene-propylene copolymers, styrene/ethylene-butene/styrene (SEBS) copolymers, styrene/ethylene-propylene/styrene (SEPS) copolymers.

Suitable block copolymers include, but are not limited to, those commercially available, such as, KRATON™ supplied by KRATON Polymers LLC in Houston, TX.

### Additional Polymers:

Additional polymers that can be present in the polymer phase of the present compositions can be co-continuous with or as a dispersed in the styrenic polymer in the polymer phase of the composition. The additional polymers can be selected to improve flame-retardancy, processing or mechanical properties. Examples of additional polymers include polyolefins, such as polar olefin polymers. Engineering plastics, such as polycarbonates, can also be used as an additional polymer.

"Olefin polymer", "olefinic polymer", "olefinic interpolymer", "polyolefin", "olefin-based polymer" and like terms mean a polymer containing, in polymerized form, a majority weight percent of an olefin, for example ethylene or propylene, based on the total weight of the polymer. Thermoplastic polyolefins include both olefin homopolymers and interpolymers. "Interpolymer" means a polymer prepared by the polymerization of at least two different monomers. The interpolymers can be random, block, homogeneous, heterogeneous, etc. This generic term includes copolymers, usually employed to refer to polymers prepared from two different monomers, and polymers prepared from more than two different monomers, e.g., terpolymers, tetrapolymers, etc.

A "polar olefin polymer," is an olefin polymer containing one or more polar groups (sometimes referred to as polar functionalities). A "polar group," as used herein, is any group that imparts a bond dipole moment to an otherwise essentially nonpolar olefin molecule. Exemplary polar groups include carbonyls, carboxylic acid groups, carboxylic acid anhydrate groups, carboxylic ester groups, epoxy groups, sulfonyl groups, nitrile groups, amide groups, silane groups and the like. These groups can be introduced into the olefin-based polymer either through grafting or copolymerization. Nonlimiting examples of polar olefin-based polymers include ethylene/acrylic acid (EAA), ethylene/methacrylic acid (EMA), ethylene/acrylate or methacrylate, ethylene/vinyl acetate (EVA), poly(ethylene-co-vinyltrimethoxysilane) copolymer, maleic anhydrate- or silane-grafted olefin polymers, poly(tetrafluoroethylene-alt-ethylene) (ETFE), poly(tetrafluoroethylene-co-hexafluoropropylene) (FEP), poly(ethylene-co-tetrafluoroethylene-co-hexafluoropropylene (EFEP), poly(vinylidene fluoride) (PVDF), poly(vinyl fluoride) (PVF), and the like. Preferred polar olefin polymers include DuPont ELVAX™ ethylene vinyl acetate (EVA) resins, AMPLIFY™ ethylene ethyl acrylate (EEA) copolymer from The Dow Chemical Company, PRIMACOR™ ethylene/acrylic acid copolymers from The Dow Chemical Company, and SI-LINK™ poly(ethylene-co-vinyltrimethoxysilane) copolymer from The Dow Chemical Company.

EVA is a preferred polar olefin polymer. This includes copolymers of EVA with one or more comonomers selected from C₁ to C₆ alkyl acrylates, C₁ to C₆ alkyl methacrylates, acrylic acid and methacrylic acid.

### Low-Melting, Phosphorus-Based Flame Retardants:

The low-melting, phosphorus-based flame retardants can be a solid or a liquid at room temperature (23 °C), but have melting points no higher than 170 °C. Examples include low-melting phosphate esters. Phosphate esters include aromatic and aliphatic phosphate esters and their oligomers and polymers. Examples of aliphatic phosphate ester flame retardants include trimethyl phosphate, tributyl phosphate, tri(2-ethylhexyl) phosphate, tributoxyethyl phosphate, monoisodecyl phosphate and 2-acryloyloxyethylacid phosphate. Examples of aromatic phosphate esters include trixylenyl phosphate, tris (phenylphenyl) phosphate, trinaphthyl phosphate, cresyldiphenyl phosphate, xylenyldiphenyl phosphate and dipheny-2-methacryloyloxyethyl phosphate. Examples of aromatic bis(phosphate esters) include resorcinol bis (diphenyl phosphate), resorcinol bis (dixylenyl phosphate), resorcinol bis(dicresylphosphate), hydroquinone bis(dixylenyl phosphate), bisphenol-A bis(diphenyl phosphate) and tetrakis (2,6-dimethylphenyl) 1,3-phenylene bisphosphate.

### Intumescent Phosphorus and Nitrogen-Containing (P-N) Flame Retardants:

The present compositions include a blend of at least two solid (at room temperature) phosphorus and nitrogen-containing intumescent flame retardants, namely a melamine derivative and piperazine pyrophosphate, both of which can be a phosphoric acid salt. An "intumescent flame retardant" is a flame retardant that yields a foamed char formed on a surface of a polymeric material during fire exposure.

Phosphoric acid salts include phosphates, pyrophosphates, metaphosphates and polyphosphates. Thus, phosphorus and nitrogen-containing flame retardants include melamine phosphate, melamine pyrophosphate, melamine orthophosphate, monoammonium phosphate, diammonium phosphate, ammonium pyrophosphate, phosphoric acid amide, melamine polyphosphate, ammonium polyphosphate, piperazine polyphosphate, polyphosphoric acid amide and combinations of two or more of the foregoing phosphoric acid salts.

Piperazine pyrophosphate and melamine pyrophosphate are examples of two phosphorus and nitrogen-containing flame retardants that can be used in the intumescent flame retardant blend of the present compositions. A blend of these two flame retardants is FP-2100J available from Adeka Palmarole.

The low-melting, phosphorus-based flame retardants are typically present in an amount of at least 5 wt.% (e.g., at least 10 wt.%), but desirably no greater than 80 wt.% (e.g, no greater than 70 wt.%), based on the total weight of the low-melting, phosphorus-based flame retardants and the phosphorus and nitrogen-containing intumescent solid flame retardants. In some embodiments of the compositions, the low-melting, phosphorus-based flame retardants and the phosphorus and nitrogen-containing intumescent solid flame retardants are the only flame retardants present.

The present compositions are well suited for high loadings of flame retardants, which can be desirable for achieving suitable flame-retardance. Thus, in some embodiments the total weight of low-melting, phosphorus-based flame retardants plus solid phosphorus and nitrogen-containing intumescent flame retardants account for at least 20 percent by weight of the composition. This includes embodiments in which the total weight of low-melting, phosphorus-based flame retardants plus solid phosphorus and nitrogen-containing intumescent flame retardants account for at least 25 percent by weight of the composition, and further includes embodiments in which the total weight of low-melting, phosphorus-based flame retardants plus solid phosphorus and nitrogen-containing intumescent flame retardants account for at least 30 percent by weight of the composition. In these embodiments the combined weight of the polymer phase (i.e., the styrenic polymer plus any additional polymers) plus the flame retardants typically account for at least 90 wt.% (e.g., at least 95wt.%) of the compositions.

### Epoxidized Novolac Resins:

The present compositions can optionally include one or more char forming agents to prevent or minimize dripping during combustion. For example, some embodiments of the compositions include an epoxidized novolac resin as a char forming agent. An "epoxidized novolac resin," is the reaction product of epichlorohydrin and phenol novolac polymer in an organic solvent. Nonlimiting examples of suitable organic solvents include acetone, methyl ethyl ketone, methyl amyl ketone, and xylene. The epoxidized novolac resin may be a liquid, a semi-solid, a solid, and combinations thereof.

The epoxidized novolac resins are typically used in amounts ranging from 0.1 to 5 wt.%, based on the total weight of the composition. This includes embodiments in which the epoxidized novolac resins are used in amounts ranging from 1 to 3 wt.%, based on the total weight of the composition and further includes embodiments in which the epoxidized novolac resins are used in amounts ranging from 1.5 to 2.5 wt.%, based on the total weight of the composition.

### Optional Additives and Fillers:

The compositions of this invention can, optionally, also contain additives and/or fillers. Representative additives include, but are not limited to, antioxidants, processing aids, colorants, ultraviolet stabilizers (including UV absorbers), antistatic agents, nucleating agents, slip agents, plasticizers, lubricants, viscosity control agents, tackifiers, anti-blocking agents, surfactants, extender oils, acid scavengers, and metal deactivators. These additives are typically used in a conventional manner and in conventional amounts, e.g., from 0.01 wt.% or less to 10 wt.% or more, based on the total weight of the composition.

Representative fillers include but are not limited to the various metal oxides, e.g., titanium dioxide; metal carbonates such as magnesium carbonate and calcium carbonate; metal sulfides and sulfates such as molybdenum disulfide and barium sulfate; metal borates such as barium borate, meta-barium borate, zinc borate and meta-zinc borate; metal anhydride such as aluminum anhydride; clay such as diatomite, kaolin and montmorillonite; huntite; celite; asbestos; ground minerals; and lithopone. These fillers are typically used a conventional manner and in conventional amounts, e.g., from 5 wt.% or less to 50 wt.% or more based on the weight of the composition.

Suitable UV light stabilizers include hindered amine light stabilizers (HALS) and UV light absorber (UVA) additives.

Examples of antioxidants include, but are not limited to, hindered phenols such as tetrakis[methylene(3,5-di-tert-butyl-4-hydroxyhydro-cinnamate)]methane; bis[(beta-(3,5-ditert-butyl-4-hydroxybenzyl)-methylcarboxyethyl)]sulphide, 4,4'-thiobis(2-methyl-6-tertbutylphenol), 4,4'-thiobis(2-tert-butyl-5-methylphenol), 2,2'-thiobis(4-methyl-6-tertbutylphenol),and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; polymerized 2,2,4-trimethyl-1,2-dihydroquinoline, n,n'-bis(1,4-dimethylpentyl-p-phenylenediamine), alkylated diphenylamines, 4,4'-bis(alpha, alpha-dimethylbenzyl)diphenylamine, diphenyl-p-phenylenediamine, mixed di-aryl-p-phenylenediamines, and other hindered amine antidegradants or stabilizers.

Examples of processing aids include, but are not limited to, metal salts of carboxylic acids such as zinc stearate or calcium stearate; fatty acids such as stearic acid, oleic acid, or erucic acid; fatty amides such as stearamide, oleamide, erucamide, or N,N'-ethylene bis-stearamide; polyethylene wax; oxidized polyethylene wax; polymers of ethylene oxide; copolymers of ethylene oxide and propylene oxide; vegetable waxes; petroleum waxes; non ionic surfactants; silicone fluids and polysiloxanes.

### Composition Properties:

The compositions can be characterized by their good mechanical and flame-retardant properties.

### Flame Retardance:

Wires coated with the compositions pass the UL-62 VW-1 flame rating for an insulated wire. "VW-1" is an Underwriters' Laboratory (UL) flame rating for wire and sleeving. It denotes "Vertical Wire, Class 1", which is the highest flame rating a wire or sleeve can be given under the UL 62 specification. The test is performed by placing the wire or sleeve in a vertical position. A flame is set underneath it for a period of time, and then removed. The characteristics of the sleeve are then noted. The VW-1 flame test is determined in accordance with method 1080 of UL-1581. Under this standard, the flame is applied for 15 seconds and then reapplied each time the wire ceases burning up to four more times. To pass the test, the wire must pass on 5 of the 5 flame applications.

### Tensile Strength and Elongation at Break:

The present compositions can be characterized by their tensile strength at break (in MPa) and elongation at break (%). Tensile strength and elongation can be measured in accordance with the ASTM D-638 testing procedure on compression molded samples prepared according to ASTM D4703. Elongation at break, or elongation to break, is the strain on a sample when it breaks. It usually is expressed as a percent.

Some embodiments of the present compositions have tensile strengths at break of at least 3 MPa. This includes compositions having tensile strength at break of at least 4 MPa and further includes compositions having a tensile strength at break of at least 5 MPa.

Some embodiments of the present compositions have an elongation at break of at least 300%. This includes compositions having an elongation at break of at least 500%, further includes compositions having an elongation at break of at least 600%, and still further includes compositions having an elongation at break of at least 700%.

### Compounding:

The compositions can be formed by mixing the styrenic block copolymers, any additional polymers, the solid P-N intumescent flame retardants, the low-melting, phosphorus-based flame retardants and any additional additives and fillers. The mixing can take place in a step-wise fashion or in a single step and can be carried out in a conventional tumbling device.

Compounding of the compositions can be effected by standard compounding equipment. Examples of compounding equipment are internal batch mixers, such as a Banbury™ or Boiling™ internal mixer or a Brabender™ mixer. Alternatively, continuous single, or twin screw, mixers can be used, such as a Farrel™ continuous mixer, a Werner and Pfleiderer™ twin screw mixer, or a Buss™ kneading continuous extruder. The type of mixer utilized, and the operating conditions of the mixer, will affect properties of the composition such as viscosity, volume resistivity, and extruded surface smoothness. The resulting compositions are desirably capable of being molded and shaped into an article, such as a wire jacket, profile, sheet or pellet for further processing.

### Articles:

Another aspect of the invention provides articles, such as molded or extruded articles, comprising one or more compositions of the present invention.

Articles include wire and cable jackets and insulation. Thus, in some embodiments, the article includes a metal conductor and a coating on the metal conductor to provide an "insulated" wire capable of electrical transmission. A "metal conductor," as used herein, is at least one metal component used to transmit either electrical power and/or electrical signals. Flexibility of wire and cables is often desired, so the metal conductor can have either a solid cross-section or can be composed of smaller wire strands that provide increased flexibility for the given overall conductor diameter. Cables are often composed of several components such as multiple insulated wires formed into an inner core, and then surrounded by a cable sheathing system providing protection and cosmetic appearance. The cable sheathing system can incorporate metallic layers such as foils or armors, and typically has a polymer layer on the surface. The one or more polymer layers incorporated into the protective/cosmetic cable sheathing are often referred to as cable "jacketing". For some cables, the sheathing is only a polymeric jacketing layer surrounding a cable core. There are also some cables having a single layer of polymer surrounding the conductors, performing both the roles of insulation and jacketing. The present compositions may be used as, or in, the polymeric components in a full range of wire and cable products, including power cables and both metallic and fiber optic communication applications. A cable containing an insulation layer comprising a composition of this invention can be prepared with various types of extruders, e.g., single or twin screw types.

The following examples illustrate various embodiments of this invention. All parts and percentages are by weight unless otherwise indicated.

### EXAMPLE

The following examples illustrate embodiments of methods for making thermoplastic elastomer compositions in accordance with the present invention.

### Methods:

A laboratory Brabender mixer (lobed batch type) is used for compounding samples (details for the raw materials are shown in Table 1, where the amount of each ingredient is listed in terms of its weight part in the composition). The laboratory batch mixer is preheated to 200 °C prior to mixing.

The SEBS, PC and EVA are added into the mixer at rotor speed of 10 rpm. At the same time a portion of the solid intumescent flame retardant blend (FP 2100J) is gradually added into the mixing bowl. After these materials melt, fluxing of the resins results in ongoing incorporation of the FP 2100J into the melt, and the remaining FP 2100J, premixed with the low-melting phosphate (BPADP) is gradually spooned into the mixer to maintain mixer fill until all of the intumescent flame retardant powder is incorporated into the melt. Then Irganox 1010 and Irgafos 168 additives are added. After all raw materials are fed into the melt, the rotor speed is increased to 45 rpm and the batch is kept mixing for 10 minutes.

Compression molded plaques are prepared at 190 °C in a hot presser, using a low pressure cycle to facilitate melting, and then a high pressure to shape granulates to 1.4 x 200 x 200 mm plaques. After compressing, the plaques are cooled down to room temperature. ASTM D-638 Type IV tensile testing bars are cut from the plaques using a dog-bone cutter in an arbor press.

### Characterization:

### Tensile Properties.

The tensile strength at break and the elongation at break are measured according to ASTM D-638 at room temperature on an INSTRON 5565 Tensile Tester by increasing the crosshead speed (@ 12 seconds) to 500 mm/min.

### Flame Retardant Properties.

A Brabender lab extruder with a wire crosshead is used to fabricate samples of insulated 18AWG stranded wire. A ramped barrel temperature, 190/190/200/200 °C, is used with a polyethylene metering screw. A 085" finish diameter over a nominal 0.047" conductor diameter is prepared. The extruder speed (about 20 rpm) is maintained at a 4.6 m/minute wiring coating speed at the target geometry. Extruder drive amps and head pressures are measured at this constant output condition for extrusion comparison of the various compositions.

The burn performance of the insulated wires is tested using the UL-62 VW-1 test. Mimic VW-1 testing is conducted in a UL-94 chamber. The test specimens have dimensions of 200*2.7*1.9 mm. The specimen is hanged on a clamp, with its longitudinal axis vertical by applying a 50 g load on to its lower end. A paper flag (2 * 0.5 cm) is placed on the top of the wire. The distance between the flame bottom (highest point of the burner oracle) and the bottom of flag is 18 cm. The flame is applied continuously for 45 sec. After flame time (AFT), uncharred wire length (UCL) and uncharred flag area percentage (flag uncharred) are recorded during and after combustion. Five specimens are tested for each sample. Any of the following phenomena will result in a rating of "not pass": (1) the cotton under the specimen is ignited; (2) the flag is burned out; or (3) dripping with flame is observed.

In addition to the pass/fail criteria under the VW-1 testing, post burning time, with is the time span for flame self-extinguish after removal of the fire source is used to judge the flame retardant performance of the compositions.

### Shore A.

Shore A was measured on a Shore A durometer.

### Results:

Formulations and properties of the examples are shown in Table 1. As shown in the table, inventive samples (IS) 1-4 comprise liquid bisphenol A diphosphate (BPADP) together with FP-2100J. Alternative inventive sample (AIS) comprises FP-2100J, without the BPADP. Comparative samples (CS) 1-4 comprise BPADP and the following flame retardant packages: (1) ammonium pyrophosphate (APP); (2) APP plus melamine cyanurate (MC); (3) a small quantity of FP-2100J and aluminum trihydrate (ATH); and (4) APP and melamine polyphosphate (MPP), respectively. Alternative comparative sample (ACS) includes APP as a flame retardant and does not include BPADP. The IS, AIS and CS further include an epoxy novolac resin, a phosphite anti-oxidant and an additional anti-oxidant.

The data in table show that all comparative samples fail VW-1 test, with very long post burning time was observed. In comparison, the inventive samples with the FP2100J/BPADP flame retardant combination provide superior burning performance, with all specimens passing the VW-1 test with very short post burning times. In addition, all the inventive samples presented excellent mechanical properties and flexibility.

All references to the Periodic Table of the Elements refer to the Periodic Table of the Elements published and copyrighted by CRC Press, Inc., 2003. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure. For purposes of United States patent practice, the contents of any referenced patent, patent application or publication are incorporated by reference in their entirety (or its equivalent US version is so incorporated by reference) especially with respect to the disclosure of synthetic techniques, product and processing designs, polymers, catalysts, definitions (to the extent not inconsistent with any definitions specifically provided in this disclosure), and general knowledge in the art.

The numerical ranges in this disclosure are approximate unless otherwise indicated. Numerical ranges include all values from and including the lower and the upper values, in increments of one unit, provided that there is a separation of at least two units between any lower value and any higher value. As an example, if a compositional, physical or other property, such as, for example, tensile strength, elongation at break, etc., is from 100 to 1,000, then the intent is that all individual values, such as 100, 101, 102, etc., and sub ranges, such as 100 to 162, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure.

As used with respect to a chemical compound, unless specifically indicated otherwise, the singular includes all isomeric forms and vice versa (for example, "hexane", includes all isomers of hexane individually or collectively). The terms "compound" and "complex" are used interchangeably to refer to organic-, inorganic- and organometallic compounds.

The term "or", unless stated otherwise, refers to the listed members individually as well as in any combination.

Although the invention has been described in considerable detail through the preceding description, drawings and examples, this detail is for the purpose of illustration.

**Table 1**

| RM name | Description | CS 1 | CS 2 | CS 3 | CS 4 | ACS | IS 1 | IS 2 | IS 3 | IS 4 | AIS |
|---|---|---|---|---|---|---|---|---|---|---|---|
| G1643M | 20% S SEBS Kraton | 33 | 33 | 28 | 33 | 33 | 33 | 33 | 30 | 35.4 | 33 |
| Calibre 200 | polycarbonate | 12 | 12 | 8 | 12 | 12 | 12 | 12 | 12 | | 12 |
| Elvax 265 | 28% V EVA | 13 | 13 | 17 | 15 | 15 | 15 | 13 | 21 | 22.8 | 15 |
| FP 600 | BPADP | 10 | 10 | 10 | 10 | | 10 | 10 | 12 | 10 | |
| FP-2100J | Intumescence FR | | | 5 | | | 30 | 30 | 25 | 30 | 40 |
| C30 | APP | 30 | 15 | | 15 | 40 | | | | | |
| MPP | melamine polyphosphate | | | | 15 | | | | | | |
| ATH | Aluminum hydrate | | | 30 | | | | | | | |
| MC15 | Melamine cyanurate | | 15 | | | | | | | | |
| DEN438 | epoxy novolac | 2 | 2 | 2 | | | | 2 | | 2 | |
| Irgaphos 168 | phosphite | 0.1 | 0.1 | 0.1 | 0.1 | 0.1 | 0.1 | 0.1 | 0.1 | 0.1 | 0.1 |
| Irganox 1010 | anti-oxidant | 0.3 | 0.3 | 0.3 | 0.3 | 0.3 | 0.3 | 0.3 | 0.3 | 0.3 | 0.3 |
| | | | | | | | | | | | |
| Tensile elongation at break % | | 583 | 680 | 654 | 509 | 561.37 | 378 | 679 | 604 | 756 | 551.87 |
| Tensile strength at break Mpa | | 4.9 | 4.7 | 2.2 | 2.9 | 4.09 | 5.1 | 5.3 | 3.1 | 3.8 | 4.36 |
| Shore A | | 84 | 82 | 70 | 82 | 88 | 80 | 83 | 73 | 60 | 81 |
| Strip test w/o flag burning | | 1/6 | 1/4 | 0/4 | 3/5 | 0/5 | 5/5 | 5/5 | 5/5 | 5/5 | 5/5 |
| post burning time s | | 36.2 | 46.5 | 53.5 | 27 | NA (dripping) | 7.4 | 4.8 | 0 | 3 | 1 |

## Claims

1. A halogen-free, flame-retardant composition comprising:
a styrenic block copolymer;
a low-melting, phosphorus-based flame retardant having a melting temperature no higher than 170 °C; and
a blend of solid intumescent flame retardants comprising a melamine derivative and piperazine pyrophosphate;
in which the styrenic block copolymer comprises at least 40 percent by weight of the total polymer content of the composition ;
wherein the composition passes the UL-62 VW-1 flame test.

2. The composition of claim 1, in which the styrenic block copolymer comprises at least 50 percent by weight of the total polymer content of the composition.

3. The halogen-free, flame-retardant composition of claim 2, in which the styrenic block copolymer is SEBS and the melamine derivative is melamine pyrophosphate.

4. The halogen-free, flame-retardant composition of claim 2, in which the low-melting, phosphorus-based flame retardant is an organic phosphate ester.

5. The halogen-free, flame-retardant composition of claim 4, in which the low-melting organic phosphate ester is bisphenol A diphosphate.

6. The halogen-free, flame-retardant composition of claim 2, further comprising a polar olefin polymer.

7. The halogen-free, flame-retardant composition of claim 6, further comprising a polycarbonate.

8. The halogen-free, flame-retardant composition of claim 1 in which the low-melting, phosphorus-based flame retardant and the blend of solid intumescent flame retardants account for at least 25 percent by weight of the composition and the blend of solid intumescent flame retardants account for at least 20 percent by weight of the total weight of the phosphorus-based flame retardant and the blend of solid intumescent flame retardants.

9. A wire or cable comprising a jacketing layer or an insulating layer comprising the halogen-free, flame-retardant composition of claim 1.

## Patentansprüche

1. Eine halogenfreie, flammhemmende Zusammensetzung, die Folgendes beinhaltet:
ein Styrolblockcopolymer;
ein niedrigschmelzender Flammhemmer auf Phosphorbasis mit einer Schmelztemperatur von nicht mehr als 170 °C; und
eine Mischung aus feststoffförmigen aufschäumenden Flammhemmern, die ein Melaminderivat und Piperazinpyrophosphat beinhaltet;
wobei das Styrolblockcopolymer mindestens 40 Gewichtsprozent des gesamten Polymergehalts der Zusammensetzung beinhaltet;
wobei die Zusammensetzung den UL-62-VW-1-Flammtest besteht.

2. Zusammensetzung gemäß Anspruch 1, wobei das Styrolblockcopolymer mindestens 50 Gewichtsprozent des gesamten Polymergehalts der Zusammensetzung beinhaltet.

3. Halogenfreie, flammhemmende Zusammensetzung gemäß Anspruch 2, wobei das Styrolblockcopolymer SEBS ist und das Melaminderivat Melaminpyrophosphat ist.

4. Halogenfreie, flammhemmende Zusammensetzung gemäß Anspruch 2, wobei der niedrigschmelzende Flammhemmer auf Phosphorbasis ein organischer Phosphatester ist.

5. Halogenfreie, flammhemmende Zusammensetzung gemäß Anspruch 4, wobei der niedrigschmelzende organische Phosphatester Bisphenol-A-diphosphat ist.

6. Halogenfreie, flammhemmende Zusammensetzung gemäß Anspruch 2, die ferner ein polares Olefin-Polymer beinhaltet.

7. Halogenfreie, flammhemmende Zusammensetzung gemäß Anspruch 6, die ferner ein Polycarbonat beinhaltet.

8. Halogenfreie, flammhemmende Zusammensetzung gemäß Anspruch 1, wobei der niedrigschmelzende Flammhemmer auf Phosphorbasis und die Mischung aus feststoffförmigen aufschäumenden Flammhemmern mindestens 25 Gewichtsprozent der Zusammensetzung ausmachen und die Mischung aus feststoffförmigen aufschäumenden Flammhemmern mindestens 20 Gewichtsprozent des Gesamtgewichts des Flammhemmers auf Phosphorbasis und der Mischung aus feststoffförmigen aufschäumenden Flammhemmern ausmacht.

9. Ein Draht oder ein Kabel, der/das eine Verkleidungsschicht oder eine Isolationsschicht beinhaltet, die die halogenfreie, flammhemmende Zusammensetzung aus Anspruch 1 beinhaltet.

## Revendications

1. Une composition de retardateur de flamme dépourvue d'halogène comprenant :
un copolymère à blocs styrénique ;
un retardateur de flamme à base de phosphore, à bas point de fusion ayant une température de fusion ne dépassant pas 170 °C ; et
un mélange homogène de retardateurs de flamme intumescents solides comprenant un dérivé de mélamine et du pyrophosphate de pipérazine ;
dans laquelle le copolymère à blocs styrénique constitue au moins 40 pour cent en poids de la teneur en polymère totale de la composition ;
la composition réussissant l'essai d'inflammabilité UL-62 VW-1.

2. La composition de la revendication 1, dans laquelle le copolymère à blocs styrénique constitue au moins 50 pour cent en poids de la teneur en polymère totale de la composition.

3. La composition de retardateur de flamme dépourvue d'halogène de la revendication 2, dans laquelle le copolymère à blocs styrénique est du SEBS et le dérivé de mélamine est du pyrophosphate de mélamine.

4. La composition de retardateur de flamme dépourvue d'halogène de la revendication 2, dans laquelle le retardateur de flamme à base de phosphore, à bas point de fusion est un ester phosphorique organique.

5. La composition de retardateur de flamme dépourvue d'halogène de la revendication 4, dans laquelle l'ester phosphorique organique à bas point de fusion est du diphosphate de bisphénol A.

6. La composition de retardateur de flamme dépourvue d'halogène de la revendication 2, comprenant en outre un polymère d'oléfines polaire.

7. La composition de retardateur de flamme dépourvue d'halogène de la revendication 6, comprenant en outre un polycarbonate.

8. La composition de retardateur de flamme dépourvue d'halogène de la revendication 1 dans laquelle le retardateur de flamme à base de phosphore, à bas point de fusion et le mélange homogène de retardateurs de flamme intumescents solides comptent pour au moins 25 pour cent en poids de la composition et le mélange homogène de retardateurs de flamme intumescents solides compte pour au moins 20 pour cent en poids du poids total du retardateur de flamme à base de phosphore et du mélange homogène de retardateurs de flamme intumescents solides.

9. Un fil ou câble comprenant une couche de gainage ou une couche isolante comprenant la composition de retardateur de flamme dépourvue d'halogène de la revendication 1.
